# EUROPÄISCHE PATENTSCHRIFT

(11) **EP 3 255 384 B1**
(45) Veröffentlichungstag und Bekanntmachung des Hinweises auf die Patenterteilung: **28.11.2018**
(21) Anmeldenummer: 16173324.1
(22) Anmeldetag: 07.06.2016
(51) Int. Cl.: G01B 7/14, G01D 5/20, G01D 5/22

(54) **MASSVERKÖRPERUNG SOWIE POSITIONSMESSEINRICHTUNG**
SCALE AND A POSITION MEASURING DEVICE
ECHELLE ET DISPOSITIF DE MESURE DE POSITION

(43) Veröffentlichungstag der Anmeldung: 13.12.2017
(73) Patentinhaber: Dr. Johannes Heidenhain GmbH, 83301 Traunreut (DE)
(72) Erfinder: TIEMANN, Marc Oliver, 83329 Waging am See (DE); NUTZINGER, Tarek, 83377 Vachendorf (DE)

(56) Entgegenhaltungen:
- EP-A1- 0 356 370
- EP-A2- 0 743 508
- EP-A2- 2 306 157
- WO-A1-97/19323

## Beschreibung

### GEBIET DER TECHNIK

Die vorliegende Erfindung betrifft eine Maßverkörperung zur induktiven Positionsmessung sowie eine Positionsmesseinrichtung mit dieser Maßverkörperung.

Positionsmesseinrichtungen, die nach dem induktiven Messprinzip arbeiten, weisen eine Maßverkörperung auf, die eine induktiv abtastbare Teilung besitzt. Die Teilung besteht aus einer Abfolge voneinander beabstandeter elektrisch leitfähiger Teilungselemente. Die Teilung wird im Messbetrieb von einer Abtasteinheit abgetastet, die zumindest eine Erregerwindung und eine Abtastwindung aufweist. Ein an der Erregerwindung eingeprägter Erregerstrom generiert ein zeitlich wechselndes elektromagnetisches Erregerfeld, das durch die Anordnung der Teilungselemente positionsabhängig beeinflusst wird, wodurch in der zugeordneten Abtastwindung ein positionsabhängiges Abtastsignal induziert wird.

### ZUSAMMENFASSUNG DER ERFINDUNG

Aufgabe der vorliegenden Erfindung ist es, eine induktiv abtastbare Maßverkörperung anzugeben, die einfach herstellbar ist und besonders stabil und unempfindlich gegenüber Umgebungseinflüssen ist.

Diese Aufgabe wird erfindungsgemäß durch eine Maßverkörperung mit den Merkmalen des Anspruchs 1 gelöst.

Die Maßverkörperung zur induktiven Positionsmessung entlang einer Messrichtung umfasst:
- ein Trägerprofil aus elektrisch leitendem Material mit zwei voneinander beabstandeten parallel zur Messrichtung verlaufenden miteinander verbundenen Seitenwänden, die einen Zwischenraum einschließen;
- eine am Trägerprofil angeordnete und im Zwischenraum einer der beiden Seitenwände gegenüberstehende und dazu beabstandet angeordnete parallel zur Messrichtung verlaufende Folge von ersten Teilungselementen aus elektrisch leitendem Material;
- eine am Trägerprofil angeordnete und im Zwischenraum der anderen der beiden Seitenwände gegenüberstehende und dazu beabstandet angeordnete parallel zur Messrichtung verlaufende Folge von zweiten Teilungselementen aus elektrisch leitendem Material, wobei
- die Folge von ersten Teilungselementen und die Folge von zweiten Teilungselementen einen Spalt für eine Abtasteinheit zur induktiven Abtastung der ersten Teilungselemente zusammen mit den zweiten Teilungselementen ausbilden.

Die Folge von ersten Teilungselementen und die Folge von zweiten Teilungselementen sind hierzu senkrecht zur Messrichtung voneinander beabstandet angeordnet.

Die ersten Teilungselemente und die zweiten Teilungselemente sind jeweils in Messrichtung voneinander beabstandete zungenförmige Elemente, die der Abtasteinheit gegenüberstehende Flächen zur Ausbildung von Wirbelströmen bilden.

Ein besonders stabiler Aufbau ergibt sich, wenn jedes der ersten und zweiten Teilungselemente jeweils an seiner Basis und an seinem senkrecht zur Messrichtung dazu beabstandeten Endabschnitt mit der ihr gegenüberstehenden Seitenwand verbunden ist.

Die ersten Teilungselemente können alternativ an ihrer Basis mit der Basis der zweiten Teilungselemente verbunden sein und zusätzlich die ersten Teilungselemente und die zweiten Teilungselemente jeweils an ihrem senkrecht zur Messrichtung dazu beabstandeten Endabschnitt mit der ihr gegenüberstehenden Seitenwand. Optional kann auch hier jedes der ersten und der zweiten Teilungselemente jeweils zusätzlich mit seiner Basis mit der ihr gegenüberstehenden Seitenwand verbunden sein.

Zur Vermeidung eines Kurzschlusses der Teilungselemente über eine der beiden Seitenwände ist es vorteilhaft, wenn die Verbindung der ersten Teilungselemente und der zweiten Teilungselemente mit der jeweils ihnen gegenüberstehenden Seitenwand zumindest an einer Position eine Engstelle aufweist, deren Breite ein Bruchteil der Breite des damit anzubindenden Teilungselementes ist Ausreichend ist, wenn die Engstelle jeweils nur an einer der beiden Positionen Basis oder Endabschnitt der Teilungselemente vorgesehen ist.

Die Verbindung der Teilungselemente an ihrem Endabschnitt mit der im Abstand gegenüberliegenden Seitenwand ist vorzugsweise jeweils als Brücke ausgebildet, die in Messrichtung eine Breite aufweist, die ein Bruchteil der Breite des anzubindenden Teilungselementes ist.

Die oben erläuterten Verbindungen der Teilungselemente miteinander sowie mit den Seitenwänden bestehen aus elektrisch leitendem Material und sind vorzugsweise durch Umformen an die Seitenwände und / oder an die Teilungselemente einstückig angeformt.

Vorteilhaft fertigen lässt sich die Maßverkörperung, wenn diese ein durch Umformen erzeugtes selbsttragendes Profil aus elektrisch leitendem Material ist.

Besonders vorteilhaft ist, wenn die Maßverkörperung, bestehend aus dem Trägerprofil - umfassend die beiden Seitenwände und die Verbindung dieser beiden Seitenwände - , sowie die Folge der ersten Teilungselemente, die Folge der zweiten Teilungselemente sowie die Verbindungen der Teilungselemente mit den Seitenwänden gemeinsam von einem durch Umformen erzeugten Profil aus elektrisch leitendem Material gebildet sind, wobei das Profil vorzugsweise ein Strangpressprofil ist. Als Materialien hierzu eignet sich besonders ein Aluminiumwerkstoff, ein Kupferwerkstoff oder auch ein elektrisch leitender Kunststoff.

Alternativ kann die Maßverkörperung auch durch Umformen von Blech hergestellt sein.

Insbesondere sind die Folge von ersten Teilungselementen und die Folge von zweiten Teilungselementen zur absoluten Positionsmessung über einen Weg ausgebildet, der mehrere erste Teilungselemente umfasst.

Vorzugsweise wird zur absoluten Positionsmessung das Nonius-Prinzip genutzt. Nonius-Prinzip bedeudet, dass die Anzahl der periodischen Wiederholungen der ersten Teilungselemente und die Anzahl der periodischen Wiederholungen der zweiten Teilungselemente in einem nichtganzzahligen Verhältnis zueinander stehen. Insbesondere ist die Folge der ersten Teilungselemente eine periodische Inkrementalteilung mit einer ersten Teilungsperiode und die Folge der zweiten Teilungselemente eine periodische Inkrementalteilung mit einer zweiten Teilungsperiode, die geringfügig von der ersten Teilungsperiode abweicht.

Eine weitere Aufgabe der vorliegenden Erfindung ist es, eine induktive Positionsmesseinrichtung anzugeben, die einfach herstellbar ist und besonders unempfindlich gegenüber Umgebungseinflüssen ist.

Diese Aufgabe wird mit einer Positionsmesseinrichtung mit den Merkmalen des Anspruchs 14 gelöst.

Diese mit der erfindungsgemäßen Maßverkörperung ausgestattete Positionsmesseinrichtung weist eine im Spalt angeordnete und relativ zur Maßverkörperung in Messrichtung verschiebbare Abtasteinheit mit einem ersten Sensor zur Abtastung der ersten Teilungselemente und mit einem zweiten Sensor zur Abtastung der zweiten Teilungselemente auf, wobei
der erste Sensor eine Erregerwindung zur Erzeugung eines elektromagnetischen Wechselfeldes und eine Abtastwindung zur Detektion des positionsabhängig modulierten elektromagnetischen Wechselfeldes in den ersten Teilungselementen aufweist, und wobei
der zweite Sensor eine Erregerwindung zur Erzeugung eines elektromagnetischen Wechselfeldes und eine Abtastwindung zur Detektion des in den zweiten Teilungselementen positionsabhängig modulierten elektromagnetischen Wechselfeldes aufweist.

Die Erregerwindungen und die Abtastwindungen sind dabei vorzugsweise als planare Windungen ausgeführt.

Vorteilhafte Ausbildungen der Erfindung sind in den abhängigen Ansprüchen angegeben.

### KURZE BESCHREIBUNG DER ZEICHNUNGEN

Vorteile sowie Einzelheiten der vorliegenden Erfindung ergeben sich aus der nachfolgenden Beschreibung von Ausführungsbeispielen anhand der beiliegenden Figuren.

Es zeigen
- Figur 1: eine perspektivische Ansicht einer erfindungsgemäß ausgestalteten induktiv abtastbaren Maßverkörperung;
- Figur 2: einen Querschnitt A-A der Maßverkörperung gemäß Figur 1;
- Figur 3: einen Querschnitt der Maßverkörperung gemäß den Figuren 1 und 2 mit einer Abtasteinheit;
- Figur 4: den prinzipiellen Aufbau der Abtasteinheit;
- Figur 5: ein zweites Beispiel einer erfindungsgemäß ausgestalteten Maßverkörperung im Querschnitt;
- Figur 6: die Teilungselemente der Maßverkörperung gemäß Figur 5, und
- Figur 7: ein drittes Beispiel einer erfindungsgemäß ausgestalteten Maßverkörperung im Querschnitt.

### BESCHREIBUNG DER AUSFÜHRUNGSFORMEN

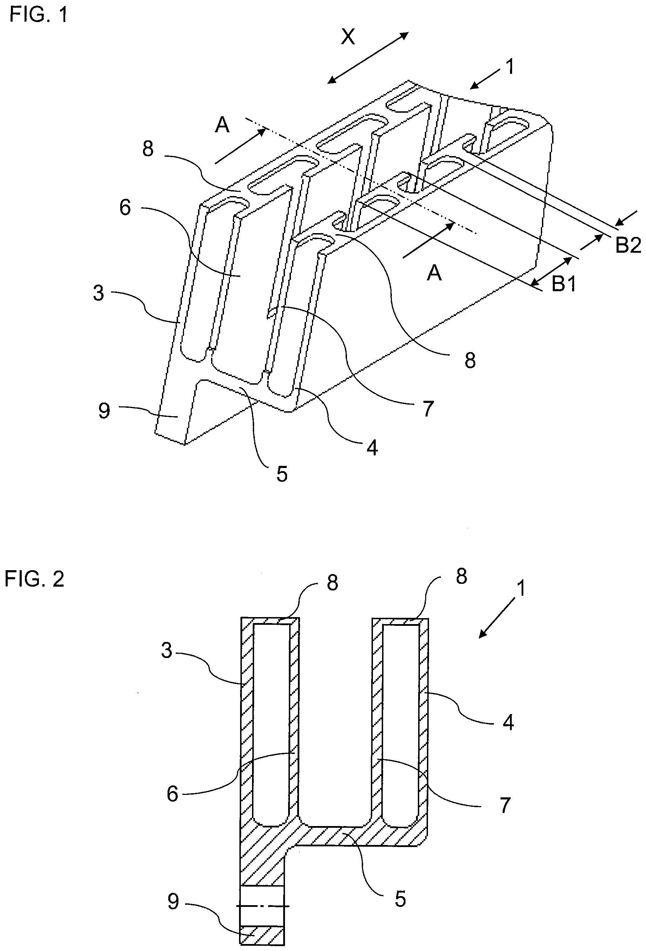

Anhand der Figuren 1 bis 4 wird ein erstes Ausführungsbeispiel der Erfindung näher erläutert. Die Figur 1 zeigt eine Maßverkörperung 1 mit zwei in Messrichtung X verlaufenden Messteilungen, die einander gegenüberliegend angeordnet sind und zwischen ihnen einen Spalt ausbilden. Die erste Messteilung wird gebildet von ersten Teilungselementen 6 mit einer ersten Teilungsperiode P1 und die zweite Messteilung wird gebildet von zweiten Teilungselementen 7 mit einer zweiten Teilungsperiode P2. Die periodisch angeordneten Teilungselemente 6 und 7 der beiden Messteilungen sind induktiv abtastbar ausgestaltet, weshalb die periodische Abfolgen der in Messrichtung X voneinander beabstandeten Teilungselemente 6, 7 aus elektrisch leitfähigem Material bestehen. Im dargestellten Ausführungsbeispiel sind diese Teilungselemente 6, 7 jeweils flächige Zungen mit rechteckiger Außenkontur. Die Teilungselemente 6, 7 bilden induktive Koppelelemente, welche die Stärke der induktiven Kopplung zwischen einer Erregerwindung 111, 121 und einer Abtastwindung 112, 113; 122, 123 positionsabhängig modulieren, indem sich jeweils in einem Teilungselement 6, 7 Wirbelströme ausbilden, die gegen das Erregerfeld wirken. Die Teilungselemente 6, 7 werden daher oft auch als Koppelelemente oder Dämpfungselemente bezeichnet.

Die Maßverkörperung 1 ist selbsttragend und besteht aus einem Trägerprofil aus elektrisch leitendem Material, das gebildet ist von zwei voneinander beabstandeten parallel zur Messrichtung X verlaufenden Seitenwänden 3 und 4, die einen Zwischenraum einschließen und eine die beiden Seitenwände zusammenhaltende Verbindung, im Beispiel als Verbindungssteg 5 ausgeführt. In dem die Seitenwände 3, 4 einschließenden Zwischenraum und der Seitenwand 3 gegenüberstehend und dazu beabstandet und parallel zur Messrichtung X verlaufend ist die Folge von ersten Teilungselemente 6 aus elektrisch leitendem Material angeordnet. Weiterhin ist in dem die Seitenwände 3, 4 einschließenden Zwischenraum und der Seitenwand 4 gegenüberstehend und dazu beabstandet sowie parallel zur Messrichtung X verlaufend die Folge der zweiten Teilungselemente 7 aus elektrisch leitendem Material angeordnet.

Die Folge der ersten Teilungselemente 6 bildet die erste Messteilung und die Folge der zweiten Teilungselemente 7 bildet die zweite Messteilung. Die Folge der ersten Teilungselemente 6 und die Folge der zweiten Teilungselemente 7 ist wiederum senkrecht zur Messrichtung X voneinander beabstandet angeordnet und bildet somit einen Spalt für eine Abtasteinheit 10 zur induktiven Abtastung der ersten Teilungselemente 6 zusammen mit den zweiten Teilungselementen 7 aus.

Die ersten Teilungselemente 6 und die zweiten Teilungselemente 7 sind jeweils am Trägerprofil angeordnete und in Messrichtung X voneinander beabstandete Zungen. Jedes der Teilungselemente 6, 7 ist mit seiner Basis an dem die Seitenwände 3, 4 verbindenden Verbindungssteg 5 angeordnet sowie mit seinem Endabschnitt mit der jeweils gegenüberliegenden Seitenwand 3 bzw. 4 über eine Verbindung aus elektrisch leitendem Material angebunden. Im Beispiel ist diese Verbindung als Brücke 8 ausgebildet, wobei jedes der ersten Teilungselemente 6 und der zweiten Teilungselemente 7 über eine separate Brücke 8 angebunden ist. Die einzelnen Brücken 8 sind in Messrichtung X voneinander beabstandet angeordnet.

Der Verbindungssteg 5 und die Brücken 8 sind Verbindungen, die quer - insbesondere senkrecht - zu den Flächen der Teilungselemente 6, 7 verlaufen, in denen sich die Wirbelströme zur Positionsmessung ausbilden. Anders ausgedrückt, der Verbindungssteg 5 und die Brücken 8 weisen Flächen auf, die zu den Flächen der Teilungselemente 6, 7 abgewinkelt verlaufen, vorzugsweise senkrecht dazu.

Damit der Widerstand zur Ausbreitung von Wirbelströmen von den Teilungselementen 6, 7 zu den Seitenwänden 3, 4 besonders groß ist, weist die Verbindung zwischen dem jeweiligen Teilungselement 6, 7 und der Seitenwand 3, 4 zumindest an einer Stelle eine Engstelle auf. Diese Engstelle der Verbindung mit der jeweiligen Seitenwand 3, 4 ist zumindest an einer der beiden Positionen Basis oder Endabschnitt vorgesehen und weist eine Breite B2 auf, die ein Bruchteil der Breite B1 des an das Trägerprofil anzubindende Teilungselement 6, 7 ist. Im Ausführungsbeispiel ist die Engstelle an den Brücken 8 ausgebildet und die Breite B2 der Brücken 8 - in Messrichtung X betrachtet - jeweils ein Bruchteil der Breite B1 des anzubindenden Teilungselementes 6, 7. Die Brücken 8 sind vorzugsweise jeweils in der Mitte eines Teilungselementes 6, 7 angeordnet. Durch die so gebildete Engstelle an zumindest einer der beiden Positionen Basis oder Endabschnitt wird ein Kurzschluss der Wirbelströme über die jeweilige Seitenwand 3, 4 verhindert und ist trotzdem eine stabile schwingungsfeste Positionierung der Teilungselemente 6, 7 gewährleistet.

In diesem ersten Ausführungsbeispiel ist die Maßverkörperung 1 ein durch Druckumformen erzeugtes Profil aus elektrisch leitendem Material. Das Druckumformen ist vorzugsweise ein Strangpressen, so dass die Maßverkörperung ein Strangpressprofil ist. Als Material eignet sich jedes strangpressbare elektrisch leitende Material, insbesondere Aluminium bzw. Aluminium-Legierungen. Durch das Strangpressen lässt sich der Hohlraum, eingeschlossen durch die äußere Seitenwand 3, den Brücken 8, der Folge von ersten Teilungselementen 6 und dem Verbindungssteg 5 sowie der Hohlraum, eingeschlossen durch die äußere Seitenwand 7, den Brücken 8, der Folge von zweiten Teilungselementen 7 und dem Verbindungssteg 5 besonders leicht herstellen. Die Teilungselemente 6, 7 sind jeweils an ihrer Basis - untere Position gemäß der Figuren 1, 2 und 3 - an dem die beiden Seitenwände 3, 4 verbindenden Verbindungssteg 5 einstückig angeformt sowie an ihrem Endabschnitt - obere Position gemäß der Figuren 1, 2 und 3 - über eine senkrecht zur Messrichtung X gerichtete Verbindung in Form einer Brücke 8 einstückig angeformt. Ist die Maßverkörperung 1 ein Strangpressprofil, so sind demnach die Seitenwände 3, 4, der Verbindungssteg 5, die Folge der ersten Teilungselemente 6, die Folge der zweiten Teilungselemente 7 sowie die Brücken 8 gemeinsam durch Strangpressen aus einem elektrisch leitfähigen Material gebildet.

Die Lücken zwischen jeweils zwei in Messrichtung X aufeinanderfolgender erster Teilungselemente 6 sowie die Lücken zwischen jeweils zwei in Messrichtung X aufeinanderfolgender zweiter Teilungselemente 7 sind aus dem Strangpressprofil durch materialabtragende Bearbeitung - insbesondere Fräsen - herausgearbeitet. Ebenso sind die Lücken zwischen aufeinanderfolgender Brücken 8 durch materialabtragende Bearbeitung - insbesondere Fräsen - gebildet.

In vorteilhafter Weise umfasst die Maßverkörperung 1 ein Montageelement 9, mit dem diese an ein zu messendes Objekt 20 angebaut werden kann, insbesondere durch Anschrauben. Das Montageelement 9 ist vorzugsweise einstückig angeformt, beispielsweise als in Messrichtung X durchgehende oder nur abschnittsweise ausgebildete leistenförmige Verlängerung einer der Seitenwände 3, 4.

Die Teilungsperiode P1 der Teilungselemente 6 der ersten Messteilung und die Teilungsperiode P2 der Teilungselemente 7 der zweiten Messteilung weichen nur geringfügig voneinander ab, so dass daraus eine Absolutposition AP über mehrere dieser Teilungsperioden P1, P2 abgeleitet werden kann. Der absoluten Positionsmessung liegt also das Noniusprinzip zugrunde.

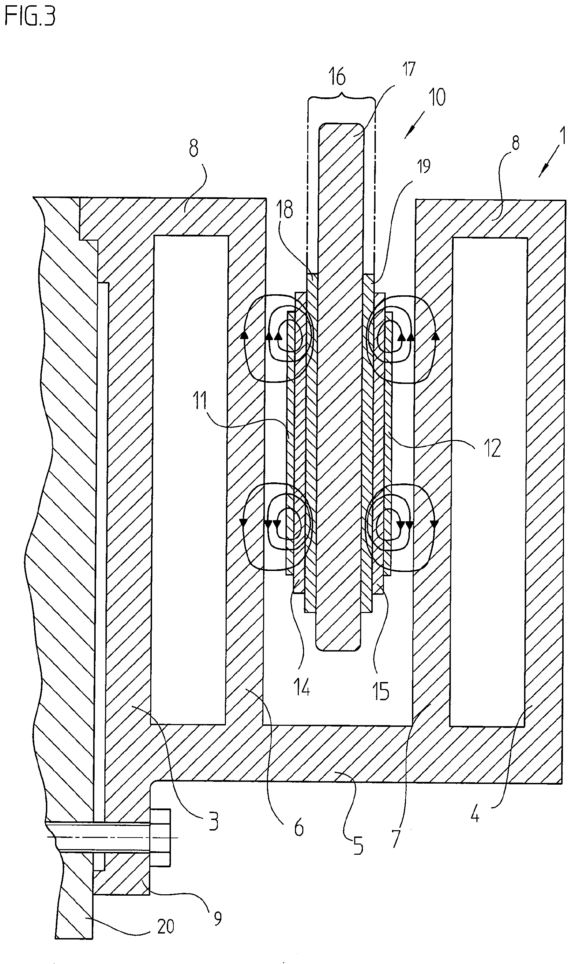

Die induktive Positionsmesseinrichtung mit der erfindungsgemäßen Maßverkörperung 1 umfasst eine Abtasteinheit 10 zur Abtastung der beiden Messteilungen, die hierzu in dem Spalt zwischen der ersten Messteilung und der zweiten Messteilung angeordnet ist. Zur Positionsmessung ist die Abtasteinheit 10 in Messrichtung X relativ zur Maßverkörperung 1 verschiebbar. Wie in der Figur 3 schematisch dargestellt ist, beinhaltet die Abtasteinheit 10 einen ersten Sensor 11 zur Abtastung der Folge der ersten Teilungselemente 6 und zur Erzeugung zumindest eines ersten positionsabhängigen Abtastsignals S1, S11. Die Abtasteinheit 10 beinhaltet weiterhin einen zweiten Sensor 12 zur Abtastung der Folge der zweiten Teilungselemente 7 und zur Erzeugung zumindest eines zweiten positionsabhängigen Abtastsignals S2, S21.

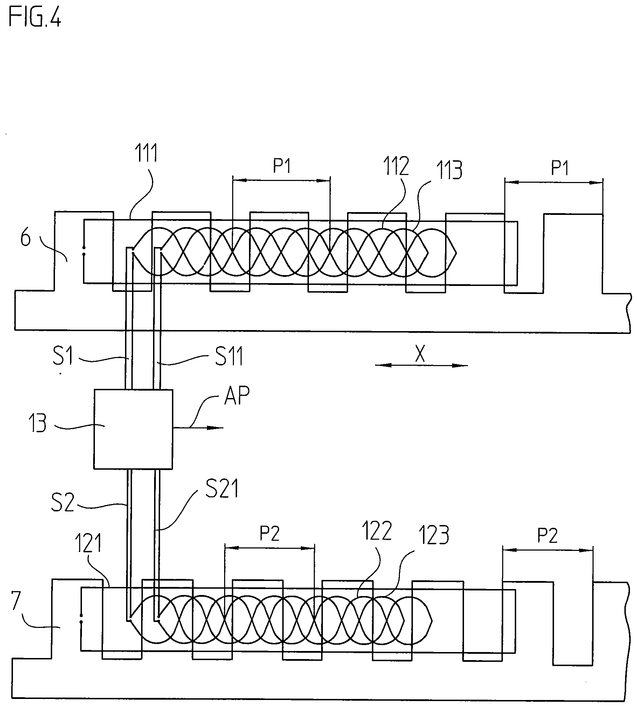

Der Aufbau der Sensoren 11 und 12 wird anhand der Figur 4 näher erläutert. Der erste Sensor 11 weist eine erste Erregerwindung 111 und mehrere erste gegeneinander phasenverschobene periodische Abtastwindungen 112, 113 auf. Ebenso weist der zweite Sensor 12 eine zweite Erregerwindung 121 und mehrere zweite gegeneinander phasenverschobene periodische Abtastwindungen 122, 123 auf. Die ersten Abtastwindungen 112, 113 umfassen jeweils mehrere in Messrichtung X verlaufende periodische sinusförmige Windungen zur gleichzeitigen Abtastung mehrerer in Messrichtung X angeordneter Teilungselemente 6 der ersten Messteilung und zur Bildung mehrerer gegeneinander phasenverschobener sinusförmiger erster Abtastsignale S1, S11 mit der Signalperiode P1. Die zweiten Abtastwindungen 122, 123 umfassen jeweils mehrere in Messrichtung X verlaufende periodische sinusförmige Windungen zur gleichzeitigen Abtastung mehrerer in Messrichtung X angeordneter Teilungselemente 7 der zweiten Messteilung und zur Bildung mehrerer gegeneinander phasenverschobener sinusförmiger zweiter Abtastsignale S2, S21 mit der Signalperiode P2.

Die planare Erregerwindung 111 des ersten Sensors 11 wird mit einem Erregerstrom derart gespeist, dass ein zeitlich wechselndes elektromagnetisches Erregerfeld im Bereich der Teilungselemente 6 der ersten Messteilung erzeugt wird. Dieser Erregerstrom weist eine Frequenz von 100 kHz bis 10 MHz auf.

Die Abtastwindungen 112, 113 des ersten Sensors 11 befinden sich innerhalb der Erregerwindung 111. Das von der Erregerwindung 111 generierte Erregerfeld generiert in den Teilungselementen 6 Wirbelströme, die als Gegenfeld gegen das Erregerfeld wirken. In den Abtastwindungen 112, 113 wird aufgrund des ihnen zugeordneten Erregerfeldes eine Spannung induziert, die von der relativen Lage zu den elektrisch leitenden Teilungselementen 6 abhängig ist. Die Erregerwindung 111 ist also mit den Abtastwindungen 112, 113 in Abhängigkeit der relativen Lage der Teilungselemente 6 dazu in Messrichtung X induktiv gekoppelt. Das elektromagnetische Wechselfeld wird durch die Teilungselemente 6 in Messrichtung X positionsabhängig moduliert, dadurch variiert auch die in den Abtastwindungen 112, 113 induzierte Spannung positionsabhängig. Die in den Abtastwindungen 112, 113 jeweils induzierte Spannung wird einer Auswerteeinheit 13 in Form der Abtastsignale S1, S11 zugeführt.

Die planare Erregerwindung 121 des zweiten Sensors 12 wird ebenso mit einem Erregerstrom derart gespeist, dass ein zeitlich wechselndes elektromagnetisches Erregerfeld im Bereich der Teilungselemente 7 erzeugt wird. Dieser Erregerstrom weist eine Frequenz von 100 kHz bis 10 MHz auf.

Die Abtastwindungen 122, 123 des zweiten Sensors 12 befinden sich innerhalb der Erregerwindung 121. Das von der Erregerwindung 121 generierte Erregerfeld generiert in den Teilungselementen 7 Wirbelströme, die als Gegenfeld gegen das Erregerfeld wirken. In den Abtastwindungen 122, 123 wird aufgrund des ihnen zugeordneten Erregerfeldes eine Spannung induziert, die von der relativen Lage zu den elektrisch leitenden Teilungselementen 7 abhängig ist. Die Erregerwindung 121 ist also mit den Abtastwindungen 122, 123 in Abhängigkeit der relativen Lage der Teilungselemente 7 dazu in Messrichtung X induktiv gekoppelt. Das elektromagnetische Wechselfeld wird durch die Teilungselemente 7 in Messrichtung X positionsabhängig moduliert, dadurch variiert auch die in den Abtastwindungen 122, 123 induzierte Spannung positionsabhängig. Die in den Abtastwindungen 122, 123 jeweils induzierte Spannung wird der Auswerteeinheit 13 in Form der Abtastsignale S2, S21 zugeführt.

Die Abtastsignale S1, S11, S2, S21 liegen an der Auswerteeinheit 13 der Abtasteinheit 10 an, welche dazu konfiguriert ist daraus in bekannter Weise die eindeutige Absolutposition AP der Abtasteinheit 10 relativ zur Maßverkörperung 1 über einen Messbereich zu erzeugen, der mehrere erste Teilungselemente 6 umfasst.

Die Auswerteeinheit 13 kann dazu ausgebildet sein, aus dem Vergleich der Phasenlagen der Abtastsignale S1, S11 mit den Abtastsignalen S2, S21 ein Schwebungssignal zu erzeugen, das die eindeutige Absolutposition AP angibt. Alternativ kann die Auswerteeinheit 13 dazu ausgebildet sein aus den Abtastsignale S1, S11 durch Interpolation eine erste Position zu erzeugen und aus den Abtastsignalen S2, S21 durch Interpolation eine zweite Position zu erzeugen und aus den beiden Positionen die eindeutige Absolutposition AP zu berechnen.

Der absolut zu codierende Messbereich ist in bekannter Weise abhängig von dem gewählten Unterschied der beiden Teilungsperioden P1, P2. Besonders vorteilhaft ist, wenn sich über den gesamten absolut zu codierenden Messbereich die Anzahl der Teilungsperioden P1 und die Anzahl der Teilungsperioden P2 um 1 unterscheidet. Die Absolutposition AP wird vorzugsweise als digitales Datenwort am Ausgang der Abtasteinheit 10 zur Verfügung gestellt, wobei die Ausgabe vorzugsweise in serieller Form erfolgt.

Der Aufbau der Abtasteinheit 10 wird anhand der Schnittdarstellung Figur 3 noch näher erläutert. Der erste Sensor 11, umfassend die Erregerwindung 111 und die Abtastwindungen 112, 113, ist auf einer ersten Leiterplatte 14 in geringem Abtastabstand zu den ersten Teilungselementen 6 angeordnet. Der zweite Sensor 12, umfassend die Erregerwindung 121 und die Abtastwindungen 122, 123, ist auf einer zweiten Leiterplatte 15 in geringem Abtastabstand zu den zweiten Teilungselementen 7 angeordnet. Zwischen dem ersten Sensor 11 und dem zweiten Sensor 12 ist eine Zwischenlage 16 angeordnet, welche ein weichmagnetisches Material umfasst.

Die Zwischenlage 16 mit dem weichmagnetischen Material hat die Funktion die von dem ersten Sensor 11 ausgehenden Feldlinien des magnetischen Wechselfeldes in der Zwischenlage 16 zu leiten und somit einen geschlossenen und räumlich begrenzten magnetischen Kreis zu bilden. Die Zwischenlage 16 hat darüber hinaus die Funktion die von dem zweiten Sensor 12 ausgehenden Feldlinien des magnetischen Wechselfeldes in der Zwischenlage 16 zu leiten und somit einen geschlossenen und räumlich begrenzten magnetischen Kreis zu bilden. Die Zwischenlage 16 trennt dadurch die Feldlinien ausgehend von dem ersten Sensor 11 von den Feldlinien ausgehend von dem zweiten Sensor 12.

Im Ausführungsbeispiel besteht die Zwischenlage 16 aus einem weichmagnetischen Kern 17, der beidseitig jeweils mit einer elektrisch nichtleitenden bzw. sehr schlecht leitenden Schicht 18, 19 versehen ist, die ein weichmagnetisches Material umfasst. In den Schichten 18, 19 können keine Wirbelströme entstehen, die das Erregerfeld der jeweiligen Sensoren 11, 12 dämpfen. Aufgrund der relativ hohen Permeabilität (sehr viel größer als 1) der Schichten 18, 19 wird das Erregerfeld in den Schichten 18, 19 geleitet und damit verstärkt. Dadurch wird verhindert, dass zu viel magnetischer Fluss bis zum Kern 17 gelangt, so dass dort keine Wirbelströme entstehen können, die das Erregerfeld dämpfen könnten. Die Dicke der Schichten 18, 19 beträgt vorzugsweise jeweils 100 µm bis 1000 µm.

In vorteilhafter Weise besteht der Kern 17 aus einem weichmagnetischen elektrisch leitfähigen Metall. Als Material für den Kern 17 eignet sich besonders weichmagnetischer Stahl. Die Dicke des Kerns 17 beträgt wenige mm.

Die Permeabilität des Kerns 17 ist vorzugsweise größer als die Permeabilität der beiden Schichten 18, 19. Damit wird erreicht, dass die Flussdichte im Kern 17 größer als in den Schichten 18, 19 ist. Externe Magnetfelder (Störfelder) verlaufen daher zum Großteil im Kern 17 und die Schichten 18, 19 kommen nicht so leicht in Sättigung.

Für die Schichten 18, 19 eignet sich insbesondere jeweils elektrisch nicht leitfähiges Matrixmaterial, in das weichmagnetische Partikel eingebettet sind. Die Schichten 18, 19 können daher von einer Folie aus Flux Field Directional Material gebildet sein. Als Matrixmaterial eignet sich Kunststoff, insbesondere Epoxidharz, in das die weichmagnetischen Partikel in Pulverform eingemischt sind.

Der mittig angeordnete Kern 17, die beidseitig darauf angeordneten Schichten 18, 19, die darauf aufgebrachten Leiterplatten 14, 15 und die darauf aufgebrachten planaren Erregerwindungen 111, 121 und Abtastwindungen 112, 113, 122, 123 bilden einen sandwichartigen Stapel. Es ergibt sich ein kompakter Aufbau und durch den metallenen Kern 17 wird auch ein mechanisch stabiler Aufbau erreicht.

Bei einem alternativen Aufbau kann die weichmagnetische Zwischenlage aus einem Mu-Metall bestehen. In diesem Ausführungsbeispiel sind die Schichten 18, 19 nicht zwingend erforderlich, so dass die Leiterplatten 14, 15 mit den darauf angeordneten planaren Erregerwindungen 111, 121 und Abtastwindungen 112, 113, 122, 123 direkt auf das Mu-Metall aufgebracht werden können. Die Zwischenlage in Form eines Mu-Metalls ist elektrisch leitfähig. Aufgrund der extrem hohen Permeabilität von Mu-Metall bei Wechselfeldern in der Größenordnung von 2 MHz ist die Endringtiefe der Wechselfelder aber sehr gering und breiten sich nur in wenigen µm Tiefe aus, so dass der effektive elektrische Widerstand sehr groß ist und daher wiederum keine bzw. nur vernachlässigbare Wirbelströme entstehen, die dem Erregerfeld der jeweiligen Erregerwindung 111, 121 entgegenwirken und es dämpfen können.

In nicht dargestellter Weise kann der erste Sensor 11 und der zweite Sensor 12 der Abtasteinheit 10 durch Beschichtung mit elektrisch isolierendem Material geschützt werden. Diese Beschichtung kann eine Folie oder eine Umspritzung der Abtasteinheit 10 sein.

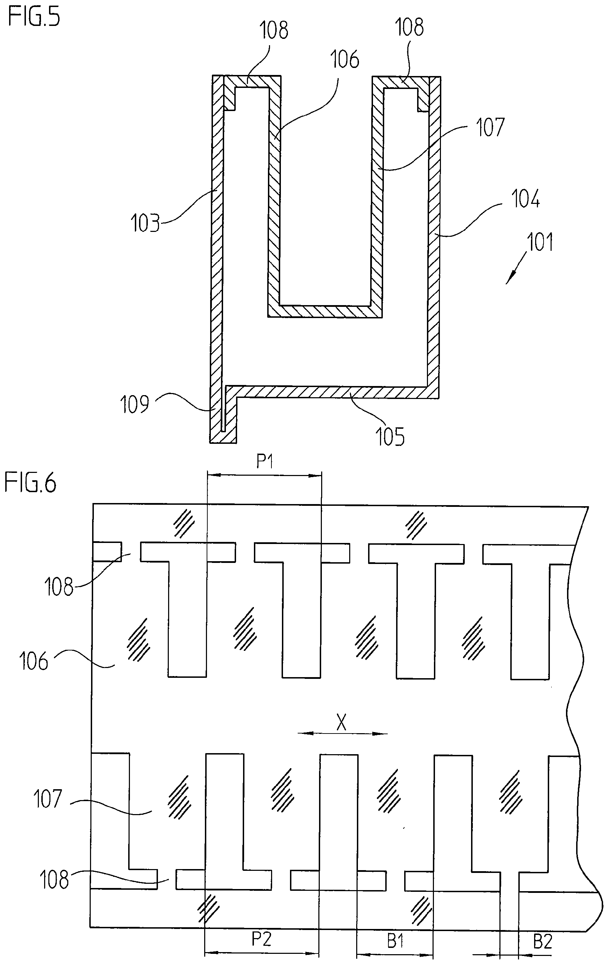

Anhand der Figuren 5 und 6 wird ein zweites Ausführungsbeispiel einer erfindungsgemäß ausgebildeten Maßverkörperung 101 erläutert. Die Maßverkörperung 101 besteht wiederum aus elektrisch leitendem Material und ist selbsttragend. Sie umfasst ein Trägerprofil, das gebildet ist von den zwei äußeren Seitenwänden 103, 104 und einen diese Seitenwände 103 und 104 verbindenden Verbindungssteg 105. Das Trägerprofil ist vorzugsweise mit einem Montageelement 109 versehen, mit dem die Maßverkörperung 101 an ein zu messendes Objekt angebaut werden kann.

In dem die beiden Seitenwände 103, 104 einschließenden Zwischenraum ist wiederum die Folge von ersten Teilungselementen 106 und die Folge von zweiten Teilungselementen 107 angeordnet. Die in Messrichtung X voneinander beabstandet angeordneten ersten Teilungselemente 106 und die in Messrichtung X voneinander beabstandeten zweiten Teilungselemente 107 sind mit ihrem Endabschnitt jeweils über Brücken 108 mit der jeweiligen Seitenwand 103, 104 verbunden. Der Verbindungssteg 105 verbindet die ersten Teilungselemente 106 mit den zweiten Teilungselementen jeweils an ihrer Basis. In diesem Beispiel besteht die Maßverkörperung 101 aus zwei Teilen, nämlich einem ersten Teil, umfassend die Brücken 108 und die Teilungselemente 106, 107 und einem zweiten Teil, umfassend die Seitenwände 103, 104 und den Verbindungssteg 105 und optional das Montageelement 109. Beide Teile bilden jeweils ein Profil, das ein Strangpressprofil sein kann oder ein Biegeteil sein kann. Im Beispiel sind beide Teile jeweils durch Umformen eines Bleches gebildet und beide Teile im Bereich der Brücken 108 miteinander fest verbunden, z.B. verschweißt. Figur 6 zeigt das Blechteil, in dem die Teilungselemente 106, 107 und die Brücken 108 ausgebildet sind, vor der Umformung. Die Lücken zwischen in Messrichtung X aufeinanderfolgender Teilungselemente 106 bzw.107 und zwischen den Brücken 108 können durch materialabtragende Bearbeitung, Laserstrahlschneiden, Wasserstrahlschneiden oder auch durch Stanzen erzeugt werden.

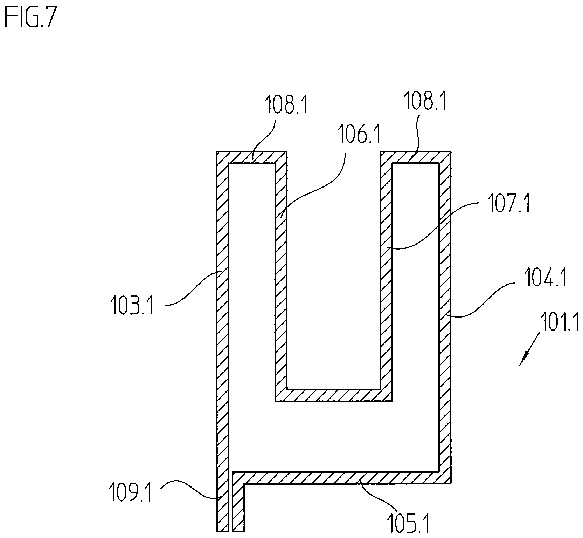

In Figur 7 ist ein weiteres Ausführungsbeispiel einer erfindungsgemäßen Maßverkörperung 101.1 dargestellt. Es entspricht dem vorhergehenden Beispiel, mit dem Unterschied, dass es einteilig durch Umformen eines Bleches hergestellt ist. Die Maßverkörperung 101.1 umfasst wiederum die zwei Seitenwände 103.1, 104.1, die mittels des Verbindungssteges 105.1 miteinander verbunden sind. Durch Umbiegen um 90° sind an die Seitenwände 103.1, 104.1 die Brücken 108.1 angeformt und durch weiteres Umbiegen um 90° sind die ersten Teilungselemente 106.1 und die zweiten Teilungselemente 107.1 daran angeformt. Optional ist auch ein Montageelement 109.1 einstückig daran angeformt.

Bei allen Beispielen ist es besonders vorteilhaft, wenn die Teilungsperiode P1 der Teilungselemente 6, 106, 106.1 der ersten Messteilung und die Teilungsperiode P2 der Teilungselemente 7, 107, 107.1 der zweiten Messteilung nur geringfügig voneinander abweichen, so dass daraus eine Absolutposition AP über mehrere dieser Teilungsperioden P1, P2 abgeleitet werden kann. Der absoluten Positionsmessung liegt dann also das Noniusprinzip zugrunde.

Alternativ kann zur induktiven absoluten Positionsmessung in nicht gezeigter Weise die erste Messteilung der Maßverkörperung ein Kettencode sein. Der Kettencode besteht in bekannter Weise aus einer Abfolge von Bits, von denen mehrere in Messrichtung aufeinanderfolgende gleichzeitig abgetastet werden und ein die Absolutposition eindeutig bestimmendes Codewort als grobe Absolutposition bilden. In diesem Fall kann die zweite Messteilung eine periodische Inkrementalteilung sein, die durch Interpolation die vom Kettencode gemessene Absolutposition weiter unterteilt und eine Feinposition bildet. Die Auswerteeinheit kombiniert die grobe Absolutposition des Kettencodes und die Feinposition der Inkrementalteilung zu einer resultierenden Absolutposition.

Der Maßverkörperung 1, 101, 101.1 können in nicht gezeigter Weise zur Positionsmessung auch mehrere in Messrichtung voneinander beabstandeter Abtasteinheiten zugeordnet sein. Dies kann zur redundanten Positionsmessung oder auch zur Messbereichserweiterung dienen. Mehrere voneinander beabstandete Abtasteinheiten können auch zur Sicherstellung der ununterbrochenen Positionsmessung über einen Stoß hinweg dienen, bei der Abtastung von mehreren nacheinander angeordneten gestoßenen Maßverkörperungen 1, 101, 101.1, wobei am Stoß von einer Abtasteinheit auf eine andere Abtasteinheit umgeschaltet werden kann.

Alle Ausführungsbeispiele haben den Vorteil, dass durch einfache Mittel eine stabile und besonders verwindungssteife Maßverkörperung 1, 101, 101.1 geschaffen ist, mit der eine reproduzierbare absolute Positionsmessung ermöglicht wird. Das Trägerprofil, gebildet von den beiden Seitenwände 3, 103, 103.1, 4, 104, 104.1 und dem Verbindungssteg 5, 105, 105.1 bildet nach außen hin eine glatte Oberfläche und mechanischen Schutz der kammförmigen Teilungselemente 6, 106, 106.1, 7, 107, 107.1. Das Trägerprofil ermöglicht eine optimale mechanische Anbindung der Teilungselemente 6, 106, 106.1, 7, 107, 107.1 sowie auch eine Anbindung derart, dass sich in den Teilungselementen 6, 106, 106.1, 7, 107, 107.1 die Wirbelströme optimal ausbilden können. Weiterhin hat das Trägerprofil die Funktion der elektromagnetischen Abschirmung vor störenden externen Fremdfeldern.

Die Hohlräume zwischen der Seitenwand 3, 103, 103.1, 4, 104, 104.1 und der jeweils gegenüberliegenden Folge von Teilungselementen 6, 106, 106.1, 7, 107, 107. kann zum Schutz vor Fremdkörpern optional mit elektrisch nichtleitendem Material ausgefüllt sein, z.B. durch schaumartige Materialien oder durch Kunststoff-Formteile.
Durch die Erfindung ist eine störsichere absolute Positionsmessung bei minimalem Raumbedarf möglich. Der Aufbau ist mechanisch besonders stabil und weitgehend störsicher, auch unter Einwirkung von elektromagnetischen Feldern bzw. Wechselfeldern, beispielsweise ausgehend von einem Linearantrieb. Daher kann die erfindungsgemäße Maßverkörperung bzw.

Positionsmesseinrichtung auch direkt an einen Linearantrieb angebaut werden. Die erfindungsgemäße Positionsmesseinrichtung ist somit insbesondere für Transportsysteme und in der Automatisierungstechnik in Verbindung mit Linearantrieben geeignet.

## Patentansprüche

1. Maßverkörperung, zur induktiven Positionsmessung entlang einer Messrichtung X, umfassend
- ein Trägerprofil aus elektrisch leitendem Material mit zwei voneinander beabstandeten parallel zur Messrichtung X verlaufenden miteinander verbundenen Seitenwänden (3, 103, 103.1, 4, 104, 104.1), die einen Zwischenraum einschließen;
- eine am Trägerprofil angeordnete und im Zwischenraum einer der beiden Seitenwände (3, 103, 103.1) gegenüberstehende und dazu beabstandet angeordnete parallel zur Messrichtung X verlaufende Folge von ersten Teilungselementen (6, 106, 106.1) aus elektrisch leitendem Material;
- eine am Trägerprofil angeordnete und im Zwischenraum der anderen der beiden Seitenwände (4, 104, 104.1) gegenüberstehende und dazu beabstandet angeordnete parallel zur Messrichtung X verlaufende Folge von zweiten Teilungselementen (7, 107, 107.1) aus elektrisch leitendem Material, wobei
die Folge von ersten Teilungselementen (6, 106, 106.1) und die Folge von zweiten Teilungselementen (7, 107, 107.1) einen Spalt für eine Abtasteinheit (10) zur induktiven Abtastung der ersten Teilungselemente (6, 106, 106.1) zusammen mit den zweiten Teilungselementen (7, 107, 107.1) ausbilden.

2. Maßverkörperung nach Anspruch 1, wobei die ersten Teilungselemente (6, 106, 106.1) und die zweiten Teilungselemente (7, 107, 107.1) jeweils in Messrichtung X voneinander beabstandete zungenförmige Elemente sind.

3. Maßverkörperung nach einem der vorhergehenden Ansprüche, wobei die Teilungselemente (6, 7) jeweils an ihrer Basis und an ihrem senkrecht zur Messrichtung X dazu beabstandeten Endabschnitt mit der ihr gegenüberstehenden Seitenwand (3, 4) verbunden sind.

4. Maßverkörperung nach einem der vorhergehenden Ansprüche, wobei die ersten Teilungselemente (6, 106, 106.1) an ihrer Basis mit den zweiten Teilungselementen (7, 107, 107.1) verbunden sind und die ersten Teilungselemente (6, 106, 106.1) jeweils an ihrem zur Basis beabstandet angeordneten Endabschnitt mit der gegenüberstehenden Seitenwand (3, 103, 103.1) verbunden sind und die zweiten Teilungselemente (7, 107, 107.1) jeweils an ihrem zur Basis beabstandet angeordneten Endabschnitt mit der gegenüberstehenden Seitenwand (4, 104, 104.1) verbunden sind.

5. Maßverkörperung nach einem der Ansprüche 3 oder 4, wobei die Verbindungen der ersten Teilungselemente (6, 106, 106.1) mit der gegenüberstehenden Seitenwand (3, 103, 103.1) und die Verbindungen der zweiten Teilungselemente (7, 107, 107.1) mit der gegenüberstehenden Seitenwand (4, 104, 104.1) jeweils zumindest an einer der beiden Positionen Basis oder Endabschnitt eine Engstelle mit einer Breite (B2) aufweisen, die ein Bruchteil der Breite (B1) des anzubindenden Teilungselementes (6, 106, 106.1, 7, 107, 107.1) ist.

6. Maßverkörperung nach Anspruch 5, wobei die Verbindungen der Teilungselemente (6, 106, 106.1, 7, 107, 107.1) an ihrem Endabschnitt mit der im Abstand gegenüberliegenden Seitenwand (3, 103, 103.1, 4, 104, 104.1) jeweils von einer Brücke (8, 108, 108.1) gebildet werden, die in Messrichtung X eine Breite (B2) aufweist, die ein Bruchteil der Breite (B1) des anzubindenden Teilungselementes (6, 106, 106.1, 7, 107, 107.1) ist.

7. Maßverkörperung nach Anspruch 6, wobei die Brücke (8, 108, 108.1) jeweils in der Mitte des Teilungselementes (6, 106, 106.1, 7, 107, 107.1) angeordnet ist.

8. Maßverkörperung nach einem der vorhergehenden Ansprüche, wobei diese ein durch Umformen erzeugtes selbsttragendes Profil aus elektrisch leitendem Material ist.

9. Maßverkörperung nach Anspruch 8, wobei diese ein Strangpressprofil ist.

10. Maßverkörperung nach einem der Ansprüche 1 bis 8, wobei diese durch Umformen von Blech hergestellt ist.

11. Maßverkörperung nach einem der vorhergehenden Ansprüche, wobei diese aus einem Aluminiummaterial besteht.

12. Maßverkörperung nach einem der vorhergehenden Ansprüche, wobei die Folge von ersten Teilungselementen (6, 106, 106.1) und die Folge von zweiten Teilungselementen (7, 107, 107.1) zur absoluten Positionsmessung über einen Weg ausgebildet sind, der mehrere erste Teilungselemente (6, 106, 106.1) umfasst.

13. Maßverkörperung nach Anspruch 12, wobei diese zur absoluten Positionsmessung nach dem Nonius-Prinzip ausgebildet ist, indem die Folge der ersten Teilungselemente (6, 106, 106.1) eine periodische Inkrementalteilung mit einer ersten Teilungsperiode (P1) ist und die Folge der zweiten Teilungselemente (7, 107, 107.1) eine periodische Inkrementalteilung mit einer zweiten Teilungsperiode (P2) ist, die von der ersten Teilungsperiode (P1) abweicht.

14. Positionsmesseinrichtung mit einer Maßverkörperung (1, 101, 101.1) nach einem der vorhergehenden Ansprüche und mit einer im Spalt angeordneten Abtasteinheit (10) mit einem ersten Sensor (11) zur Abtastung der ersten Teilungselemente (6, 106, 106.1) und mit einem zweiten Sensor (12) zur Abtastung der zweiten Teilungselemente (7, 107, 107.1) wobei
der erste Sensor (11) eine Erregerwindung (111) zur Erzeugung eines elektromagnetischen Wechselfeldes und eine Abtastwindung (112, 113) zur Detektion des positionsabhängig modulierten elektromagnetischen Wechselfeldes in den ersten Teilungselementen (6, 106, 106.1) aufweist, und wobei
der zweite Sensor (12) eine Erregerwindung (121) zur Erzeugung eines elektromagnetischen Wechselfeldes und eine Abtastwindung (122, 123) zur Detektion des in den zweiten Teilungselementen (7, 107, 107.1) positionsabhängig modulierten elektromagnetischen Wechselfeldes aufweist.

15. Positionsmesseinrichtung nach Anspruch 14, wobei zwischen der Abtastwindung (112, 113) des ersten Sensors (11) und der Abtastwindung (122, 123) des zweiten Sensors (12) zumindest eine Zwischenlage (16) angeordnet ist, die ein weichmagnetisches Material umfasst.

16. Positionsmesseinrichtung nach Anspruch 15, wobei die Zwischenlage (16) einen weichmagnetischen Kern (17) und beidseitig darauf angeordnete elektrisch nicht leitfähige weichmagnetische Schichten (18, 19) umfasst.

17. Positionsmesseinrichtung nach Anspruch 16, wobei der Kern (17) aus einem weichmagnetischen elektrisch leitfähigen Metall besteht und die Schichten (18, 19) jeweils ein elektrisch nicht leitfähiges Matrixmaterial umfassen, in das weichmagnetische Partikel eingebettet sind.

## Claims

1. Material measure, for inductive position measurement along a measurement direction X, comprising
- a carrier profile composed of electrically conductive material and having two side walls (3, 103, 103.1, 4, 104, 104.1), which are spaced apart from one another, run in parallel with the measurement direction X, are connected to one another and enclose an intermediate space;
- a sequence of first graduation elements (6, 106, 106.1) composed of electrically conductive material, which sequence is arranged on the carrier profile and, in the intermediate space, faces one of the two side walls (3, 103, 103.1) and is arranged spaced apart therefrom and runs in parallel with the measurement direction X;
- a sequence of second graduation elements (7, 107, 107.1) composed of electrically conductive material, which sequence is arranged on the carrier profile and, in the intermediate space, faces the other of the two side walls (4, 104, 104.1) and is spaced apart therefrom and runs in parallel with the measurement direction X, wherein
the sequence of first graduation elements (6, 106, 106.1) and the sequence of second graduation elements (7, 107, 107.1) form a gap for a scanning unit (10) for the inductive scanning of the first graduation elements (6, 106, 106.1) together with the second graduation elements (7, 107, 107.1).

2. Material measure according to Claim 1, wherein the first graduation elements (6, 106, 106.1) and the second graduation elements (7, 107, 107.1) are each tongue-shaped elements that are spaced apart from one another in the measurement direction X.

3. Material measure according to either of the preceding claims, wherein the graduation elements (6, 7) are respectively connected at their base and at their end section, which is perpendicular to the measurement direction X and spaced apart therefrom, to the side wall (3, 4) facing said respective graduation element.

4. Material measure according to one of the preceding claims, wherein the first graduation elements (6, 106, 106.1) are connected at their base to the second graduation elements (7, 107, 107.1) and the first graduation elements (6, 106, 106.1) are respectively connected to their end section, which is arranged spaced apart from the base, to the facing side wall (3, 103, 103.1) and the second graduation elements (7, 107, 107.1) are respectively connected to their end section, which is arranged spaced apart from the base, to the facing side wall (4, 104, 104.1).

5. Material measure according to either of Claims 3 and 4, wherein the connections of the first graduation elements (6, 106, 106.1) to the facing side wall (3, 103, 103.1) and the connections of the second graduation elements (7, 107, 107.1) to the facing side wall (4, 104, 104.1) respectively have a constriction at least at one of the two positions of base or end section, said constriction having a width (B2) that is a fraction of the width (B1) of the graduation element (6, 106, 106.1, 7, 107, 107.1) to be connected.

6. Material measure according to Claim 5, wherein the connections of the graduation elements (6, 106, 106.1, 7, 107, 107.1) at their end section to the side wall (3, 103, 103.1, 4, 104, 104.1) located opposite at a distance are respectively formed by a bridge (8, 108, 108.1), which has a width (B2) in the measurement direction X that is a fraction of the width (B1) of the graduation element (6, 106, 106.1, 7, 107, 107.1) to be connected.

7. Material measure according to Claim 6, wherein the bridge (8, 108, 108.1) is arranged in each case in the centre of the graduation element (6, 106, 106.1, 7, 107, 107.1).

8. Material measure according to one of the preceding claims, wherein said material measure is a self-supporting profile composed of electrically conductive material and produced by way of deformation.

9. Material measure according to Claim 8, wherein said material measure is an extruded profile.

10. Material measure according to one of Claims 1 to 8, wherein said material measure is manufactured by deformation of sheet metal.

11. Material measure according to one of the preceding claims, wherein said material measure consists of an aluminium material.

12. Material measure according to one of the preceding claims, wherein the sequence of first graduation elements (6, 106, 106.1) and the sequence of second graduation elements (7, 107, 107.1) are designed for absolute position measurement over a path that comprises a plurality of first graduation elements (6, 106, 106.1).

13. Material measure according to Claim 12, wherein said material measure is designed for absolute position measurement in accordance with the Nonius principle by virtue of the fact that the sequence of first graduation elements (6, 106, 106.1) is a periodic incremental graduation with a first graduation period (P1) and the sequence of second graduation elements (7, 107, 107.1) is a periodic incremental graduation with a second graduation period (P2), which deviates from the first graduation period (P1).

14. Position measuring device having a material measure (1, 101, 101.1) according to one of the preceding claims and having a scanning unit (10) arranged in the gap, said scanning unit having a first sensor (11) for scanning the first graduation elements (6, 106, 106.1) and having a second sensor (12) for scanning the second graduation elements (7, 107, 107.1), wherein
the first sensor (11) has a field winding (111) for generating an alternating electromagnetic field and a scanning winding (112, 113) for detecting the alternating electromagnetic field modulated in a position-dependent manner in the first graduation elements (6, 106, 106.1), and wherein
the second sensor (12) has a field winding (121) for generating an alternating electromagnetic field and a scanning winding (122, 123) for detecting the alternating electromagnetic field modulated in a position-dependent manner in the second graduation elements (7, 107, 107.1).

15. Position measuring device according to Claim 14, wherein at least one intermediate layer (16) is arranged between the scanning winding (112, 113) of the first sensor (11) and the scanning winding (122, 123) of the second sensor (12), said intermediate layer comprising a soft-magnetic material.

16. Position measuring device according to Claim 15, wherein the intermediate layer (16) comprises a soft-magnetic core (17) and electrically non-conductive, soft-magnetic layers (18, 19) arranged on both sides of said core.

17. Position measuring device according to Claim 16, wherein the core (17) consists of a soft-magnetic, electrically conductive metal and the layers (18, 19) each comprise an electrically non-conductive matrix material, into which soft-magnetic particles are embedded.

## Revendications

1. Mesure matérialisée pour la mesure de position inductive le long d'une direction de mesure X, comprenant
- un profilé porteur en matériau électriquement conducteur, doté de deux parois latérales (3, 103, 103.1, 4, 104, 104.1) reliées entre elles qui s'étendent parallèlement à la direction de mesure X, lesquelles entourent un espace intermédiaire ;
- une séquence de premiers éléments de graduation (6, 106, 106.1) en matériau électriquement conducteur, disposés sur le profilé porteur et s'étendant parallèlement à la direction de mesure X dans l'espace intermédiaire à l'opposé de l'une des deux parois latérales (3, 103, 103.1) en étant espacés de celle-ci ;
- une séquence de deuxièmes éléments de graduation (7, 107, 107.1) en matériau électriquement conducteur, disposés sur le profilé porteur et s'étendant parallèlement à la direction de mesure X dans l'espace intermédiaire à l'opposé de l'autre des deux parois latérales (4, 104, 104.1) en étant espacés de celle-ci, la séquence de premiers éléments de graduation (6, 106, 106.1) et la séquence de deuxièmes éléments de graduation (7, 107, 107.1) formant un intervalle pour une unité de palpage (10) servant au palpage inductif des premiers éléments de graduation (6, 106, 106.1) conjointement avec les deuxièmes éléments de graduation (7, 107, 107.1).

2. Mesure matérialisée selon la revendication 1, les premiers éléments de graduation (6, 106, 106.1) et les deuxièmes éléments de graduation (7, 107, 107.1) étant des éléments en forme de languette respectivement espacés les uns des autres dans la direction de mesure X.

3. Mesure matérialisée selon l'une des revendications précédentes, les éléments de graduation (6, 7) étant respectivement reliés à la paroi latérale (3, 4) qui leur est opposée au niveau de leur base et au niveau de leur portion d'extrémité espacée de celle-ci perpendiculairement à la direction de mesure X.

4. Mesure matérialisée selon l'une des revendications précédentes, les premiers éléments de graduation (6, 106, 106.1) étant reliés aux deuxièmes éléments de graduation (7, 107, 107.1) au niveau de leur base et les premiers éléments de graduation (6, 106, 106.1) étant respectivement reliés à la paroi latérale (3, 103, 103.1) opposée au niveau de leur portion d'extrémité espacée de leur base et les deuxièmes éléments de graduation (7, 107, 107.1) étant respectivement reliés à la paroi latérale (4, 104, 104.1) opposée au niveau de leur portion d'extrémité espacée de leur base.

5. Mesure matérialisée selon l'une des revendications 3 et 4, les liaisons des premiers éléments de graduation (6, 106, 106.1) avec la paroi latérale (3, 103, 103.1) opposée et les liaisons des deuxièmes éléments de graduation (7, 107, 107.1) avec la paroi latérale (4, 104, 104.1) opposée possédant respectivement, au niveau de l'une des deux positions base ou portion d'extrémité, un point d'étranglement ayant une largeur (B2) qui est une fraction de la largeur (B1) de l'élément de graduation (6, 106, 106.1, 7, 107, 107.1) à attacher.

6. Mesure matérialisée selon la revendication 5, les liaisons des premiers éléments de graduation (6, 106, 106.1, 7, 107, 107.1) au niveau de leur portion d'extrémité avec la paroi latérale (3, 103, 103.1, 4, 104, 104.1) opposée espacée sont respectivement formées par un pont (8, 108, 108.1) qui présente, dans la direction de mesure X, une largeur (B2) qui est une fraction de la largeur (B1) de l'élément de graduation (6, 106, 106.1, 7, 107, 107.1) à attacher.

7. Mesure matérialisée selon la revendication 6, le pont (8, 108, 108.1) étant respectivement disposé au centre de l'élément de graduation (6, 106, 106.1, 7, 107, 107.1).

8. Mesure matérialisée selon l'une des revendications précédentes, celle-ci étant un profilé autoportant en matériau électriquement conducteur produit par façonnage.

9. Mesure matérialisée selon la revendication 8, celle-ci étant un profilé extrudé.

10. Mesure matérialisée selon l'une des revendications 1 à 8, celle-ci étant fabriquée par façonnage de tôle.

11. Mesure matérialisée selon l'une des revendications précédentes, celle-ci étant constituée d'un matériau à base d'aluminium.

12. Mesure matérialisée selon l'une des revendications précédentes, la séquence de premiers éléments de graduation (6, 106, 106.1) et la séquence de deuxièmes éléments de graduation (7, 107, 107.1) étant configurées pour la mesure de position absolue sur un parcours qui comporte plusieurs premiers éléments de graduation (6, 106, 106.1).

13. Mesure matérialisée selon la revendication 12, celle-ci étant configurée pour la mesure de position absolue selon le principe du vernier, en ce que la séquence de premiers éléments de graduation (6, 106, 106.1) est une graduation incrémentale périodique ayant une première période de graduation (P1) et la séquence de deuxièmes éléments de graduation (7, 107, 107.1) est une graduation incrémentale périodique ayant une deuxième période de graduation (P2), qui est différente de la première période de graduation (P1).

14. Dispositif de mesure de position comprenant une mesure matérialisée (1, 101, 101.1) selon l'une des revendications précédentes et comprenant une unité de palpage (10) disposée dans un intervalle, munie d'un capteur (11) servant au palpage des premiers éléments de graduation (6, 106, 106.1) et munie d'un deuxième capteur (12) servant au palpage des deuxièmes éléments de graduation (7, 107, 107.1),
le premier capteur (11) possédant un enroulement d'excitation (111) destiné à générer un champ électromagnétique alterné et un enroulement de palpage (112, 113) destiné à détecter le champ électromagnétique alterné modulé dépendant de la position dans les premiers éléments de graduation (6, 106, 106.1), et
le deuxième capteur (12) possédant un enroulement d'excitation (121) destiné à générer un champ électromagnétique alterné et un enroulement de palpage (122, 123) destiné à détecter le champ électromagnétique alterné modulé dépendant de la position dans les deuxièmes éléments de graduation (7, 107, 107.1).

15. Dispositif de mesure de position selon la revendication 14, au moins une couche intermédiaire (16), laquelle comporte un matériau magnétique doux, étant disposée entre l'enroulement de palpage (112, 113) du premier capteur (11) et l'enroulement de palpage (122, 123) du deuxième capteur (12).

16. Dispositif de mesure de position selon la revendication 15, la couche intermédiaire (16) comportant un noyau magnétique doux (17) et des couches magnétiques douces (18, 19) électriquement non conductrices disposées des deux côtés de celle-ci.

17. Dispositif de mesure de position selon la revendication 16, le noyau (17) étant constitué d'un métal électriquement conducteur magnétique doux et les couches (18, 19) comportant respectivement un matériau de matrice électriquement non conducteur dans lequel sont enrobées des particules magnétiques douces.
